# EUROPÄISCHE PATENTSCHRIFT

(11) **EP 0 520 289 B1**
(45) Veröffentlichungstag und Bekanntmachung des Hinweises auf die Patenterteilung: **05.11.1997**
(21) Anmeldenummer: 92110110.1
(22) Anmeldetag: 16.06.1992
(51) Int. Cl.: G06K 19/07, G11B 15/00

(54) **Vorrichtung zur Programmierung eines Videorecorders mit einer Datenträgerkarte**
Device for programming a video recorder with a memory card
Dispositif de programmation d'un magnétoscope avec une carte à mémoire

(30) Priorität: 22.06.1991 DE 4120635
(43) Veröffentlichungstag der Anmeldung: 30.12.1992
(73) Patentinhaber: GRUNDIG Aktiengesellschaft, 90762 Fürth (DE)
(72) Erfinder: Raab, Frank, Grundig E.M.V., 90762 Fürth (DE)

(56) Entgegenhaltungen:
- EP-A- 0 328 440
- EP-A- 0 436 472
- DE-A- 3 637 684
- FUNKSCHAU Nr. 5, 24. Februar 1989, Seiten 59 - 62 CHARLES SCHEPERS 'DER SCHLUESSEL ZUM SCRAMBLING-PROBLEM?'

## Beschreibung

Die Erfindung betrifft eine Vorrichtung zur Programmierung eines Videorecorders mit den im Oberbegriff des Anspruchs 1 angegebenen Merkmalen.

Neben der seit längerem bekannten Möglichkeit, den Programmierspeicher eines Videorecorders manuell unter Verwendung der Ziffern- und Funktionstasten der Bedieneinheit zu programmieren, ist es auch bereits bekannt, die Videorecorderprogrammierung unter Verwendung eines in einer Programmzeitschrift abgedruckten Strichcodes oder unter Verwendung der im Rahmen des Fernsehtextangebotes angebotenen Programmvorschauseiten durchzuführen. In diesem Zusammenhang wird beispielsweise auf die Zeitschrift "Funk-Technik" 41 (1986), H. 6, S. 249-251, hingewiesen.

Der wesentliche Nachteil der manuellen Programmierung des Videorecorders unter Verwendung der Ziffern- und Funktionstasten der Bedieneinheit liegt - abgesehen davon, daß es umständlich ist, eine Vielzahl von Ziffern, die dem Sendetag, der Sendezeit und dem Kanal eines gewünschten Programmbeitrages entsprechen, in genau vorgegebener Reihenfolge eingeben zu müssen - in der vergleichsweise hohen Wahrscheinlichkeit von Fehlprogrammierungen, welche Aufzeichnungsvorgänge zu unerwünschten Zeiten oder ein völliges Unterbleiben einer Aufzeichnung zur Folge haben können.

Zur Realisierung einer Videorecorderprogrammierung unter Verwendung eines in einer Programmzeitschrift abgedruckten Strichcodes ist es notwendig, daß vergleichsweise viel Platz in der Programmzeitschrift zum Abdruck eines Strichcodes zu jeder einzelnen Fernsehsendung zur Verfügung gestellt wird, was den Umfang der Zeitschrift erheblich vergrößert.

Aus EP-A 0 328 440 ist ein System zur Auswahl von Rundfunk- oder Fernsehsendungen, das auch zur Programmierung eines Videorecordes verwendet werden kann, bekannt. Hierzu wird zu Beginn und eventuell auch am Ende einer Sendung eine Kennung ausgesendet. Der Benutzer speichert auf einer Datenträgerkarte, die mit dem Empfangsgerät oder dem Videorecorder gekoppelt ist, die Codes von gewünschten Sendungen, so daß bei einem Empfang der entsprechenden Codes eine Aktivierung des Empfangsgeräts oder Videorecorders erfolgt.

Die Aufgabe der Erfindung besteht darin, einen neuen Weg der senderunabhängigen Programmierung von Videorecordern aufzuzeigen, bei welchem die obigen Nachteile nicht auftreten.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen ergeben sich aus den abhängigen Ansprüchen 2-7. Die Ansprüche 8 und 9 betreffen eine Datenträgerkarte zur Verwendung bei der Programmierung von Videorecordern.

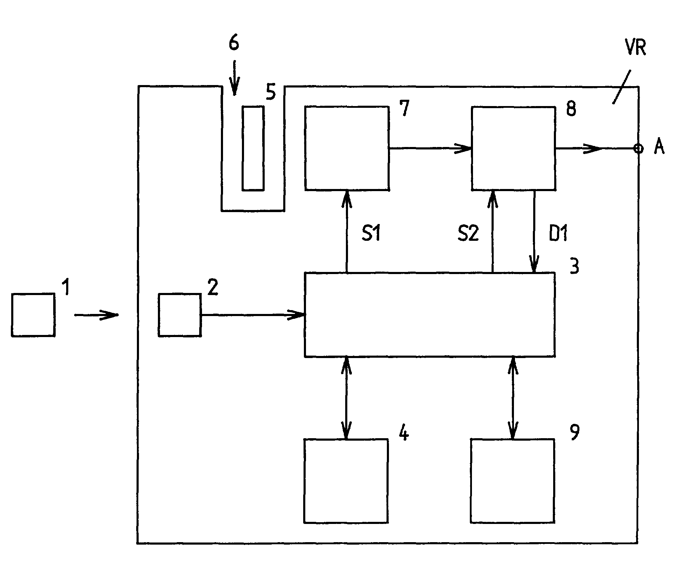

Die Vorteile der Erfindung ergeben sich aus der beispielhaften Erläuterung der Erfindung anhand der Figur. Diese zeigt einen Videorecorder VR mit einer Bedieneinheit, bestehend aus einem Fernbedienungsgeber 1 und einem Fernbedienempfänger 2, einem Mikrocomputer 3, einem Programmierspeicher 4, einer in einen Schlitz 6 des Videorecorders eingelegten Datenträgerkarte 5, einem Datenträgerkartenleser 7, einem Zwischenspeicher 8, einem Archivspeicher 9 und einem Ausgang A.

Bei der Datenträgerkarte handelt es sich vorzugsweise um eine Magnetkarte oder eine Chipkarte. Auf dieser Datenträgerkarte, die - beispielsweise wöchentlich - als separate Einheit oder in Verbindung mit einer Fernsehprogrammzeitschrift vertrieben werden kann, sind sowohl alle zur Programmierung des Videorecorders notwendigen Sendungsdaten der Fernsehprogramme einer Woche eines oder mehrerer Sender, wie Sendetag, Anfangszeit, Endzeit und ggfs. Sendekanal, als auch weitere, die einzelnen Fernsehprogramme der genannten Woche beschreibende Daten, wie beispielsweise der Titel der Sendung, ggfs. eine Kurzbeschreibung des Inhaltes, usw., abgespeichert.

Ist die Datenträgerkarte 5 in den Schlitz 6 des Videorecorders eingelegt und wird mittels der Bedieneinheit 1, 2 der Programmiervorgang eingeleitet, dann initiiert der Mikrocomputer 3 über die Steuerleitung S1 den Datenträgerkartenleser 7 zur Abtastung der auf der Datenträgerkarte 5 abgespeicherten Informationen. Diese werden entweder seitenweise oder komplett in den Zwischenspeicher 8 übernommen und von dort aus unter Steuerung (Steuerleitung S2) durch den Mikrocomputer 3 seitenweise über den Ausgang A einem an den Videorecorder angeschlossenen Fernsehempfänger zugeführt und auf dessen Bildschirm dargestellt.

Eine auf dem Bildschirm dargestellte Seite ist vorzugsweise so aufgebaut wie eine im Rahmen des Fernsehtextdienstes dargestellte Programmvorschauseite, d.h. sie enthält beispielsweise die Bezeichnung des Fernsehsenders, das Datum der Ausstrahlung der auf der Bildschirmseite dargestellten Sendungen, deren Anfangs- und Endzeiten und deren Titel sowie ggfs. zusätzlich eine Kurzbeschreibung jeder Sendung.

Ein Weiterblättern zwischen den einzelnen, auf der Datenträgerkarte 5 bzw. im Zwischenspeicher 8 abgespeicherten Programmvorschauseiten kann mittels der Cursor-Steuertasten des Fernbedienungsgebers 1 erfolgen.

Innerhalb der jeweils dargestellten Seite wird zur Auswahl einer gewünschten Sendung, die aufgezeichnet werden soll, ebenfalls unter Verwendung der Cursor-Steuertasten des Fernbedienungsgebers 1 die gewünschte Sendung angewählt und dann eine Übernahmetaste auf dem Fernbedienungsgeber 1 betätigt. Daraufhin werden die zur Programmierung des Videorecorders notwendigen Sendungsdaten der gewünschten Sendung wie Sendetag, Anfangszeit und Endzeit sowie ggfs. der Sendekanal und der Titel vom Zwischenspeicher 8 über die Datenleitung D1 und den Mikrocomputer 3 im Programmierspeicher 4 abgelegt.

Die Abspeicherung des Titels der gewünschten Sendung im Programmierspeicher 4 ist vorteilhaft, weil der Videorecorder mit einem Archivspeicher 9 ausgerüstet ist, wie es beispielsweise aus der Zeitschrift "Funkschau" 10/1991, S. 54-56, grundsätzlich bekannt ist. In diesem Archivspeicher werden zu jeder Videokassette alle kassettenbezogenen Daten wie Titel und Laufzeit jeder auf der Kassette enthaltenen Aufzeichnung, die zugehörige Kassettennummer und die zeitliche Position auf dem Band abgespeichert, wobei die genannten Daten zu einer bestimmten Aufzeichnung beispielsweise unmittelbar nach Beendigung des Aufzeichnungsvorganges in den Archivspeicher übernommen werden.

Dieser Archivspeicher kann im Unterschied zu dem aus dem genannten Funkschau-Artikel bekannten Archivspeicher auch auf einer Chipkarte enthalten sein, welche beim Aufzeichnungs- und Wiedergabevorgang in den Schlitz 6 des Videorecorders eingeführt wird.

Gemäß einer vorteilhaften Weiterbildung werden im Archivspeicher 9 zu jeder Videokassette auch die magnetischen Daten des Videobandes der Kassette in geeigneter Form abgespeichert und bei späteren Aufzeichnungs- und Wiedergabevorgängen zur Optimierung der Bildqualität verwendet. Die genannten magnetischen Daten des Videobandes können beispielsweise im Rahmen eines am Anfang der ersten Aufzeichnung auf das jeweilige Band ohnehin erfolgenden automatischen Initialisierungslaufes, welcher zur Ermittlung der momentanen Bandposition durchgeführt wird, durch Aufzeichnung und Wiedergabe von Testsignalen auf das Band ermittelt werden. Die Aufzeichnung der Testsignale kann in den Videoschrägspuren oder in einer parallel zur Bandkante verlaufenden Längsspur erfolgen.

Besonders vorteilhaft ist es auch, wenn auf der Datenträgerkarte 5 im Rahmen der Kurzbeschreibung jeder einzelnen Sendung bzw. jedem einzelnen Programmbeitrag ein Kennsignal für die Programmart zugeordnet ist. Programmarten sind beispielsweise Sport, Spielfilme, Musiksendungen, Kindersendungen, usw.. Dieses Kennsignal für die Programmart kann bei der Videorecorderprogrammierung dazu verwendet werden, sich aus der gesamten auf der Datenträgerkarte 5 bzw. im Zwischenspeicher 8 abgespeicherten Programmvorschau lediglich Sendungen einer gewünschten Programmart, beispielsweise Spielfilme, auf dem Bildschirm anzeigen zu lassen. Das Durchtasten durch die Sendungen der gewünschten Programmart erfolgt ebenfalls mittels der Cursor-Steuertasten des Fernbedienungsgebers 1.

## Patentansprüche

1. Vorrichtung zur Aufzeichnungsprogrammierung eines Videorecorders (VR), mit einer Datenträgerkarte (5) als Quelle für Programmierdaten, mit einem Programmierspeicher (4) zur Abspeicherung der Programmierdaten,
dadurch gekennzeichnet,
daß die auf der Datenträgerkarte (5) gespeicherten Sendungsdaten zur Darstellung auf einem Bildschirm vorgesehen sind und daß Mittel zur Auswahl aufzuzeichnender Sendungen aus den gespeicherten Sendungsdaten im Ansprechen auf einen Auswahlbefehl und zur Ablage im Programmierspeicher des Videorecorders (VR) vorgesehen sind.

2. Vorrichtung nach Anspruch 1,
dadurch gekennzeichnet,
daß die auf der Datenträgerkarte (5) abgespeicherten Programmierdaten für jeden einzelnen Programmbeitrag ein Kennsignal für die Programmart des Programmbeitrages, enthalten und zur Aufzeichnungsprogrammierung nur Sendungen einer gewünschten Programmart angezeigt werden und daß eine Bedieneinheit (1, 2) zur Auswahl eines aufzuzeichnenden Programmbeitrages derart vorgesehen ist, daß die Programmierdaten eines aus den angezeigten Sendungen ausgewählten Programmbeitrages im Programmierspeicher (4) abgelegt werden.

3. Vorrichtung nach einem der Ansprüche 1 oder 2,
dadurch gekennzeichnet,
daß die Datenträgerkarte (5) eine Magnet- oder Chipkarte ist, die als separate Einheit vorgesehen ist und die als Sendungsdaten Sendetag, Anfangszeit, Endzeit und Sendekanal enthält.

4. Vorrichtung nach einem der Ansprüche 1 bis 3,
dadurch gekennzeichnet,
daß die Datenträgerkarte (5) weitere, die einzelnen Fernsehprogramme beschreibende Daten enthält.

5. Vorrichtung nach einem der Ansprüche 1 bis 4,
dadurch gekennzeichnet,
daß die Vorrichtung einen Archivspeicher (9) enthält, in welchen Informationen, die auf der Datenträgerkarte (5) aufgezeichnet sind, übernommen werden.

6. Vorrichtung nach einem der Ansprüche 1 bis 5,
dadurch gekennzeichnet,
daß im Archivspeicher (9) Informationen über die magnetischen Daten eines Magnetbandes abgespeichert sind.

7. Vorrichtung nach einem der Ansprüche 1 bis 6,
dadurch gekennzeichnet,
daß die Vorrichtung Mittelaufweist um die Informationen über die magnetischen Daten eines Magnetbandes im Rahmen eines am Anfang der ersten Aufzeichnung auf das Magnetband automatisch erfolgenden Initialisierungslaufes zu ermitteln.

8. Videorecorder (VR) mit einer Vorrichtung nach einem der Ansprüche 1 bis 7.

## Claims

1. Device for programming the recording of a video recorder (VR), comprising a data carrier card (5) as source for programming data, and comprising a programming memory (4) for storing the programming data, characterized in that the transmission data stored on the data carrier card (5) are provided for displaying on a viewing screen and in that means are provided for selecting transmissions to be recorded from the stored transmission data in response to a selection command and for storing them in the programming memory of the video recorder (VR).

2. Device according to Claim 1, characterized in that the programming data stored on the data carrier card (5) contain, for every individual programme item, a code signal for the type of programme of the programme item and only transmissions of a desired type of programme are displayed for programming recordings and in that an operating unit (1, 2) is provided for selecting a programme item to be recorded in such a way that the programming data of a programme item selected from the displayed transmissions are stored in the programming memory (4).

3. Device according to one of Claims 1 or 2, characterized in that the data carrier card (5) is a magnet card or chip card which is provided as a separate unit and which contains transmission date, start time, finish time and transmission channel as transmission data.

4. Device according to one of Claims 1 to 3, characterized in that the data carrier card (5) contains further data which describe the individual television programmes.

5. Device according to one of Claims 1 to 4, characterized in that the device contains an archive memory (9) into which information is transferred which is recorded on the data carrier card (5).

6. Device according to one of Claims 1 to 5, characterized in that information about the magnetic data of a magnetic tape is stored in the archive memory (9).

7. Device according to one of Claims 1 to 6, characterized in that the device has means for determining the information about the magnetic data of a magnetic tape as part of an initialization run which takes place automatically at the start of the first recording onto the magnetic tape.

8. Video recorder (VR) having a device according to one of Claims 1 to 7.

## Revendications

1. Dispositif pour la programmation d'enregistrement d'un magnétoscope (VR), comportant une carte (5) formant support de données en tant que source de données de programmation et une mémoire de programmation (4) pour mémoriser des données de programmation, caractérisé en ce que les données d'émission mémorisées sur la carte (5) formant support de données sont destinées à être représentées sur un écran et que des moyens sont prévus pour sélectionner des émissions devant être enregistrées, à partir des données d'émission mémorisées, en réponse à une instruction de sélection et pour la mémorisation dans la mémoire de programmation du magnétoscope (VR).

2. Dispositif selon la revendication 1, caractérisé en ce que les données de programmation mémorisées dans la carte (5) formant support de données pour chaque section individuelle de programme contiennent un signal caractéristique pour le type de programme de la section de programme, et que seules des émissions d'un type désiré de programme sont affichées pour la programmation de l'enregistrement, et qu'il est prévu une unité de commande (1,2) pour la sélection d'une section de programme devant être enregistrée de telle sorte que les données de programmation d'une section de programme sélectionnée à partir des émissions affichées, sont mémorisées dans la mémoire (4) de programme.

3. Dispositif selon l'une des revendications 1 ou 2, caractérisé en ce que la carte (5) formant support de données est une carte magnétique ou une carte à puce, qui est prévue en tant qu'unité séparée et qui contient, en tant que données d'émission, le jour d'émission, l'instant de début, l'instant de fin et le canal d'émission.

4. Dispositif selon l'une des revendications 1 à 3, caractérisé en ce que la carte (5) formant support de données comporte d'autres données qui décrivent les différents programmes de télévision.

5. Dispositif selon l'une des revendications 1 à 4, caractérisé en ce que le dispositif contient une mémoire d'archivage (9), dans laquelle sont transférées des informations qui sont enregistrées sur la carte (5) formant support de données.

6. Dispositif selon l'une des revendications 1 à 5, caractérisé en ce que des informations concernant les données magnétiques d'une carte magnétique sont mémorisées dans la mémoire d'archivage (9).

7. Dispositif selon l'une des revendications 1 à 6, caractérisé en ce que le dispositif comporte des moyens pour déterminer les informations concernant les données magnétiques d'une bande magnétique dans le cadre d'un cycle d'initialisation qui est exécuté automatiquement au début du premier enregistrement sur la bande magnétique.

8. Magnétoscope (VR) comportant un dispositif selon l'une des revendications 1 à 7.
